# EUROPÄISCHE PATENTSCHRIFT

(11) **EP 2 257 770 B1**
(45) Veröffentlichungstag und Bekanntmachung des Hinweises auf die Patenterteilung: **07.09.2011**
(21) Anmeldenummer: 08852592.8
(22) Anmeldetag: 14.10.2008
(51) Int. Cl.: G01D 11/30

(54) **KLEMMBUCHSE FÜR EINEN SENSOR**
ADAPTER BUSHING FOR A SENSOR
DOUILLE À SERRAGE POUR UN CAPTEUR

(30) Priorität: 22.11.2007 DE 102007056340
(43) Veröffentlichungstag der Anmeldung: 08.12.2010
(73) Patentinhaber: WABCO GmbH, 30453 Hannover (DE)
(72) Erfinder: SINGBARTL, Günther, 30161 Hannover (DE)
(74) Vertreter: Lauerwald, Jörg
(86) Internationale Anmeldenummer: PCT/EP2008/008676
(87) Internationale Veröffentlichungsnummer: WO 2009/065471

(56) Entgegenhaltungen:
- DE-U1- 8 815 130

## Beschreibung

Die Erfindung bezieht sich auf eine Klemmbuchse für einen Sensor gemäß dem Oberbegriff des Patentanspruchs 1.

Sensoren, insbesondere Stabsensoren der o. g. Art dienen z.B. zum Abtasten der Geschwindigkeit eines Lastkraftfahrzeugrades. Diese Geschwindigkeitsinformation wird z. B. als Eingangsgröße einer ABS-Bremsanlage benötigt. Hierbei liegt dem mit der Karosserie des Fahrzeugs verbundenen Stabsensor ein mit dem Rad verbundenes gezahntes Polrad gegenüber. Der richtige Luftspalt zwischen Stabsensor und Polrad ist für die Funktion der Anordnung wichtig und muss in engen Toleranzen eingehalten werden. Dabei ist auch zu beachten, dass der Stabsensor und dessen Fertigung und Einbau in großen Serien erfolgt und daher der Herstellungsaufwand nicht zu hoch sein darf.

Bei den aktuell immer mehr in Lastkraftfahrzeugen eingesetzten Achsen mit Scheibenbremsen tritt im Sensoreinbauraum vergleichsweise mehr Strahlungswärme während und nach der Bremsung von der Bremsscheibe her zum Sensor bzw. dessen Einbaustelle hin auf. Das führt bei diesen Fahrzeugen generell zu deutlich höheren Umgebungstemperaturen im Einbaubereich des Sensors, genauer, des Sensorkopfbereiches. Diese erhöhte Wärme tritt länger andauernd oder auch nur kurzzeitig auf.

Der thermische Anwendungsbereiche für ABS-Sensoren für Nutzfahrzeuganwendung wird differenziert nach Dauertemperatur von - 40 °C bis + 150 °C und einer Kurzzeittemperatur von + 180 °C wobei die Kurzzeit eine Stunde beträgt. Unter Grenzbedingungen können die Bremsscheiben in Lastkraftfahrzeugen auch Temperaturen von + 500 °C bis sogar + 700 °C erreichen.

Aus der Druckschrift "WABCO Anti-Blockier-System", Ausgabe September 81, ist bekannt, den Stabsensor mittels einer Klemmbuchse in einer Bohrung eines Stabsensorhalters mit einem definierten Reibschluss zu lagern. Eine solche lediglich reibschlüssige Lagerung bzw. Justierung ist deshalb nötig, damit der Stabsensor bei einer Berührung mit dem gegenüberliegenden Polrad zurückweichen kann und damit Beschädigungen vermieden werden. Weiter ist die einfache Montage durch Einstecken des Stabsensors vorteilhaft. Die durch den Reibschluss erzeugte Haltekraft muss so groß sein, dass sich der Stabsensor im Betrieb auch bei Schwingungen seines Halters, bewirkt z. B. durch quietschende Bremsen, nicht selbsttätig verschieben kann.

Andererseits darf die Haltekraft nicht zu groß sein, damit dass oben erwähnte Einstecken des Stabsensors und das Zurückweichen vor dem Polrad noch ohne Hilfswerkzeuge möglich ist und auch bei der Sensorselbstjustierung (automatische Luftspalteinstellung) während des Betriebes die Reibungskräfte nicht zu groß werden. Während dieser automatischen Luftspalteinstellung im Fahrbetrieb und durch dabei zeitweiligem Kontakt des Polrades mit dem Sensor, z. B. bei auftretendem Radlagerspiel und elastischen Verformungen in der Achse, erfolgt noch durch Reibungswärme ein zusätzlicher Wärmeeintrag in den Sensor.

Das für die Erzeugung der Haltekraft maßgebliche Bauteil ist eine z. B. aus Beryllium-Bronze gestanzte Klemmbuchse. Ferner spielen auch die Oberflächengüten des Stabsensors und der Bohrung des Stabsensorhalters eine Rolle.

Die Klemmbuchse ist so ausgebildet, dass sie sich einerseits durch Reibschluss selbst in der Bohrung des Stabsensorhalters hält und dass andererseits der in die Klemmbuchse eingesteckte Stabsensor gehalten wird. Hierzu ist die Klemmbuchse, wie in der o. g. Druckschrift dargestellt, mit federnden Zungen versehen. Die Spitzen dieser Zungen berühren die Innenwand der Bohrung des Stabsensorhalters. Die nach innen gebogenen Mittelteile der Zungen berühren den Stabsensor und drücken ihn auf gegenüberliegende, durch Eindrücken des Klemmbuchsenmantels erzeugte Festpunkte der Klemmbuchse.

Ferner ist aus der DE 32 29 207 C2 eine Klemmbuchse für einen Stabsensor bekannt, bei der das Mittelteil jeder Zunge verbreitert ist und wobei das nach innen gebogene Teil der Zungen zwischen ihrer breitesten Stelle und der Zungenspitze liegt. Hierbei bewirkt die einseitige Anordnung der Zungen mit gegenüberliegenden Festpunkten zwangsläufig eine exzentrische Stecklage des Stabsensors in der Endhaltestellung, was zu einer Querverschiebung während des Steckens des Stabsensors führt und dadurch keine, für die bestmögliche Auslegung und Wirkung notwendige, radiale Kraftwirkung auf die Zungen erreicht wird. Daraus resultieren streuende Kraftwerte und ein ungleichmäßiger Kraftverlauf.

Die zu größeren Werten hin streuenden Haltekräfte bewirken im Einsatz zeitweise erhöhte Reibkräfte und eine zusätzliche Wärmeeinwirkung auf den Sensor. Die aus den Klemmkräften heraus entstehende Reibungswärme kommt noch zu den schon im Sensorbereich ohnehin oftmals vorliegenden hohen Umgebungstemperaturen hinzu und hat insofern bei Nutzfahrzeugen mit Scheibenbremsen besonderes Gewicht. Diese zusätzliche Wärmeinbringung ist direkt von der tatsächlich vorhandenen Klemmbuchsen-Klemmkraft abhängig, die deshalb von dem für die Haltefunktion erforderlichen Sollwert möglichst wenig abweichen sollte.

Der Erfindung liegt die Aufgabe zugrunde, eine Klemmbuchse der eingangs genannten Art so zu verbessern, dass die Genauigkeit und Gleichmäßigkeit der definierten Haltekräfte des Sensors in der Aufnahmebohrung und Klemmbuchse auf einfache und kostengünstige Weise verbessert werden.

Diese Aufgabe wird durch die kennzeichnenden Merkmale des Anspruchs 1 gelöst. Die Unteransprüche enthalten vorteilhafte Weiterbildungen der Erfindung.

Ein Vorteil besteht darin, dass eine insgesamt geringere thermischer Belastung des Sensors im Einsatz und indirekt auch eine Reduzierung der mechanischen Belastungen bewirkt werden.

Des Weiteren ist es von Vorteil, dass es durch die erfindungsgemäße Klemmbuchse möglich ist, die geforderte Klemmkraft mit sehr geringer Toleranz relativ genau schon bei der Herstellung der Klemmbuchse einzuhalten. Hierdurch werden nachträgliche Prüfkosten für die Klemmbuchse verringert, da (durch den erzielten gleichmäßigen Kraftverlauf) eine elektronische Auswertung des Kraftmesswertes ermöglicht wird. Qualität und Prozessfähigkeit in der Kette von Produktion bis zum Kunden hin und eine insgesamt geringere thermischer Belastung des Sensors im Einsatz und indirekt auch der mechanischen Belastungen werden hierdurch erreicht.

Die erfindungsgemäße Klemmbuchse ist besonders für so genannte Stabsensoren, d. h. für Sensoren mit einer im Wesentlichen zylindrischen Form, geeignet.

Erfindungsgemäß weist die Klemmbuchse so genannte Festpunkte auf, wobei ein in die Klemmbuchse eingeführter Sensor einerseits von mindestens einer federnden Zunge gegen mindestens einen Festpunkt gedrückt wird. Hierbei liegt im Wesentlichen der Festpunkt gegenüber der federnden Zunge. Es versteht sich dabei von selbst, dass unter dem Begriff "Festpunkt" nicht nur ein punktförmiger, sondern auch ein linienförmiger oder auch ein flächiger Kontaktbereich zwischen dem Sensor und der Klemmbuchse gemeint sein soll.

Weiterhin weist die Klemmbuchse erfindungsgemäß mindestens ein so genanntes Hebe-/Führungselement auf, welches vor mindestens einem Festpunkt und/oder mindestens einer federnden Zunge angeordnet ist. Hierbei ist das "vor" aus Richtung des einzusteckenden Sensors zu sehen. D. h. der Sensor berührt beim Einstecken zuerst das Hebe-/Führungselement und erst beim weiteren Einstecken einen Festpunkt bzw. eine federnde Zunge. Hierbei wird der Sensor beim Einstecken durch das Hebe-/Führungselement in Richtung des Festpunktes bzw. der federnden Zunge angehoben. Die Hebe-/Führungselemente weisen also in radialer Richtung der Klemmbuchse gesehen eine geringere Höhe als die Festpunkte auf.

In einer weiteren vorteilhaften Ausführungsform weist die Klemmbuchse an der zur Einsteckseite hin gerichteten Kante eine Fase ("Einführungsfase") auf, die das Einstecken der Klemmbuchse in die zugehörige Bohrung erleichtert. Diese Fase weist bevorzugt einen Winkel im Bereich von 10°-20° bezüglich der axialen Richtung der Klemmbuchse auf. Besonders bevorzugt ist ein Winkel von 15° für die Fase.

Des Weiteren ist es gemäß einer Ausführungsform vorgesehen, an wenigstens einer Stelle der in Richtung der Einsteckseite gerichteten Kante der Klemmbuchse eine Einführungskontur vorzusehen. Diese Einführungskontur ist im Wesentlichen unter einem Winkel zur axialen Richtung der Klemmbuchse ausgerichtet und kann eine gradlinige oder eine gerundete Kontur aufweisen. Vorteilhafterweise ist diese Kontur an dem herstellungsseitig vorgesehen Längsschlitz angeordnet. Durch diese Einführungskontur wird das Einstecken der Klemmbuchse in die zugehörige Bohrung dahingehend erleichtert, dass die Klemmbuchse auch leicht geneigt zur Einsteckrichtung in die Bohrung eingeführt werden kann. Hierdurch wird insbesondere bei ungünstigen platzierten bzw. schlecht zugänglichen Bohrungen die Montage der Klemmbuchse erleichtert. Die Einführungskontur weist bevorzugt einen Winkel im Bereich 25°-30° bezüglich des Längsschlitzes auf. Besonders bevorzugt ist ein Winkel von 28° für die Einführungskontur.

Vorteilhafterweise besteht die Klemmbuchse im Wesentlichen aus einem Federmaterial wie beispielsweise Beryllium-Bronze (CuBe) oder Chrom-Nickel (CrNi).

Vorteilhafterweise ist der Längsschlitz gradlinig, d. h. in rein axialer Richtung der Klemmbuchse, ausgerichtet. Durch diese gradlinige Ausführung weist der Längsschlitz in radialer Richtung der Klemmbuchse keine Ausdehnung auf wodurch das Einstecken der Klemmbuchse in eine Bohrung des Stabsensorhalters erleichtert wird, da die Klemmbuchse sich nicht in der Bohrung verkanten kann. Ausführungsbeispiele der Erfindung sind in der Zeichnung dargestellt und werden im Folgenden näher beschrieben.

Es zeigt
- Fig. 1: einen mittels einer Klemmbuchse in einer Bohrung gehaltenen Stab- sensor,
- Fig. 2: eine Klemmbuchse nach dem Stand der Technik,
- Fig.3: ein erstes Ausführungsbeispiel einer Klemmbuchse,
- Fig.4: das erste Ausführungsbeispiel gemäß Fig. 3 in vier Ansichten und
- Fig. 5: eine Detailansicht der Festpunkte und Hebe-/ Führungselemente gemäß Fig. 4,
- Fig. 6: ein zweites Ausführungsbeispiel einer Klemmbuchse mit Einfüh- rungsfase und Einführungskontur,
- Fig. 7: ein drittes Ausführungsbeispiel einer Klemmbuchse mit Einführungs- kontur.

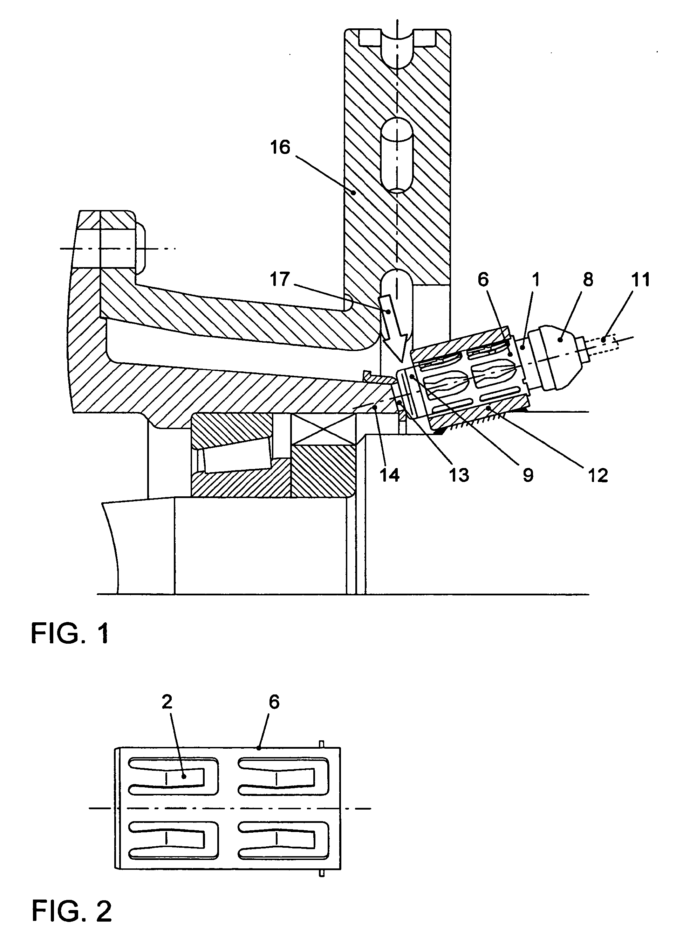

In der Fig. 1 ist ein Stabsensor 1 dargestellt, der zur Messung der Drehung eines Fahrzeugrades dient. Der Stabsensor 1 ist in einer Bohrung eines Halteteils 12, das bezüglich der Fahrkarosserie feststeht, gelagert. Zwischen Stabsensor 1 und Halteteil 12 befindet sich die Klemmbuchse 6. Gegenüber dem Kopf 9 des Stabsensors 1 liegt ein gezahntes Polrad 13. Dieses ist fest mit der Radnabe 14 eines Fahrzeugrades verbunden. Der Fuß 8 des Stabsensors 1 ist mit einem elektrischen Anschlusskabel 11 versehen: Benachbart zum Sensor befindet sich die Bremsscheibe 16 und die beim Bremsen entstehende Strahlungswärme ist mit einem Pfeil 17 dargestellt.

Zur Montage des Stabsensors 1 wird dieser zunächst gegen die Reibkraft der Klemmbuchse 6 in die Bohrung des Halteteils 12 eingeschoben, bis er das Polrad 13 berührt. Im Betrieb des Fahrzeugs wird der Stabsensor 1 dann wieder durch das Polrad 13 ein Stück zurückgeschoben, so dass sich ein endgültiger Luftspalt einstellt. Während dieser automatischen Luftspalteinstellung im Fahrbetrieb und durch dabei zeitweiligem Kontakt des Polrades 13 mit dem Sensor 1, z. B. bei auftretendem Radlagerspiel und elastischen Verformungen in der Achse, erfolgt noch ein zusätzlicher Wärmeeintrag durch die entstehende Reibungswärme in den Sensor 1. Die zu größeren Werten hin streuenden Haltekräfte der Klemmbuchse 6 bewirken im Einsatz zeitweise erhöhte Reibkräfte und zusätzliche Wärmeeinwirkung auf den Sensor 1. Die aus den Klemmkräften heraus entstehende Reibungswärme kommt oftmals noch zu den im Sensorbereich ohnehin schon vorliegenden hohen Umgebungstemperaturen hinzu und hat insofern bei Nutzfahrzeugen mit Scheibenbremsen besonderes Gewicht. Diese zusätzliche Wärmeinbringung ist direkt von der vorhandenen Klemmkraft der Klemmbuchse 6 abhängig, die deshalb von dem für die Haltefunktion erforderlichen Sollwert, möglichst wenig abweichen sollte. Die durch die Klemmbuchse 6 erzeugte Haltekraft muss im weiteren Betrieb stark genug sein, um den Stabsensor 1 in dieser Stellung festzuhalten.

In Fig. 2 ist eine Klemmbuchse 6 gemäß dem Stand der Technik dargestellt. Die Klemmbuchse 6 hat die Form einer geschlitzten Hülse und ist im Durchmesser auf den Stabsensordurchmesser abgestimmt. Die Klemmwirkung wird durch vier relativ kurze Zungen 2 von gleich bleibender Breite erzeugt, welche den Stabsensor auf gegenüberliegende (in Fig. 2 nicht sichtbare) Festpunkte 10 drücken. Die Strich-Punkt-Linie stellt die Mittelachse der Klemmbuchse 6 dar.

Das Andrücken des Stabsensors 1 gegen Festpunkte hat den Vorteil, dass ein Schwingen des Stabsensors 1 weitgehend verhindert wird. Dieses könnte bei einem lediglich in federnden Zungen 2 gelagerten Stabsensor 1 auftreten und zu elektrischen Fehlsignalen führen.

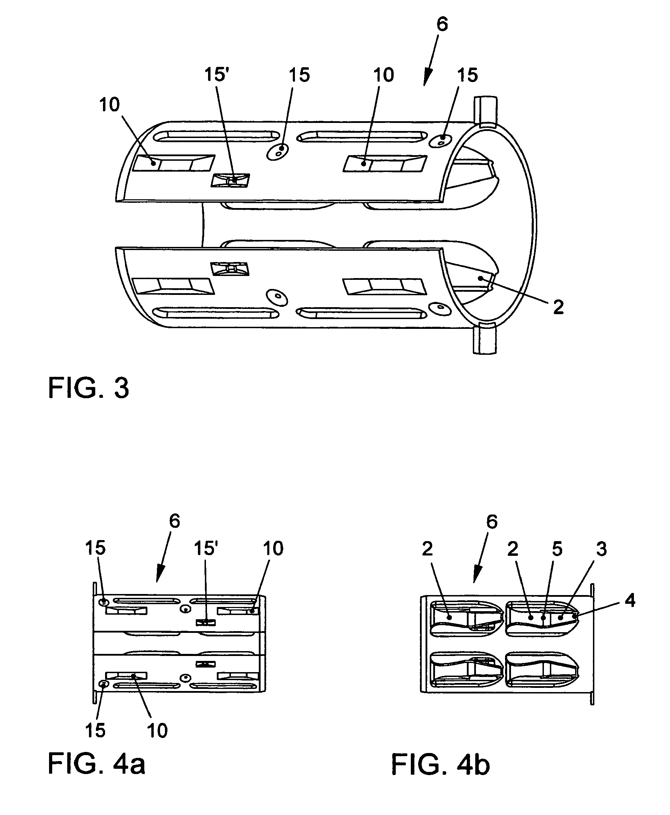

Die Fig. 3 zeigt eine erste Ausführungsform der erfindungsgemäßen Klemmbuchse 6 in perspektivischer Darstellung. Die Klemmbuchse 6 weist hierbei federnde Zungen 2, Festpunkte 10 zum Halten eines Stabsensors 1 in einer Endhaltestellung und Hebe/-Führungselemente 15 bzw. 15' auf. Bei dieser Ausführungsform weist die Klemmbuchse 6 jeweils vier zur Achse einseitig angeordneten federnde Zungen 2 (hier nur teilweise sichtbar) und in etwa zu den federnden Zungen 2 gegenüberliegende Festpunkte 10 auf, durch die ein Stabsensor 1 in montierter Stellung mit genau definiertem Kraft- und Reibschluss gehalten wird. Die Festpunkte 10 und die Hebe-/ Führungselemente 15 bzw. 15' sind hierbei als zusätzliche Ausformungen in/an der Mantelfläche der Klemmbuchse 6 ausgeführt. Die Festpunkte 10 und die Hebe-/ Führungselemente 15 bzw. 15' können z. B. durch einen Präge- bzw. Stanzvorgang hergestellt werden. Die Hebe-/ Führungselemente 15 bzw. 15' sind räumlich vor den vorderen und hinteren Festpunkten 10 angeordnet, wobei die Hebe-/ Führungselemente 15 bzw. 15' in radialer Richtung eine geringere Ausdehnung als die Festpunkte 10 aufweisen. Hierdurch wird der Stabsensor beim Einstecken in die Klemmbuchse 6 durch die Hebe-/ Führungselemente 15 bzw. 15' in Richtung der Festpunkte 10 angehoben, wodurch ein nahezu verkantungsfreies Einstecken des Stabsensors 1 gewährleistet ist. Durch dieses gestufte Anheben des Stabsensors 1 auf die Höhe der Festpunkte 10 ist auch eine geringere Kraft nötig um den Stabsensor 1 in die Klemmbuchse 6 einzuführen. Weiterhin wird die Genauigkeit und Gleichmäßigkeit der Kräfte bzw. Steckkraftkennlinie durch die zusätzlichen Hebe-/ Führungselemente 15 bzw. 15' erhöht bzw. sichergestellt. Die Hebe-/ Führungselemente 15 bzw. 15' können selbstverständlich auch nur räumlich vor den vorderen oder nur vor den hinteren Festpunkten 10 angeordnet werden.

Die Hebe-/ Führungselemente 15 bzw. 15' können bei einer Klemmbuchse 6 entweder alle "rund" (siehe Bezugszeichen 15) oder "rampenartig" (siehe Bezugszeichen 15') oder auch "gemischt", d. h. sowohl "rund" als auch "rampenartig", ausgeführt sein.

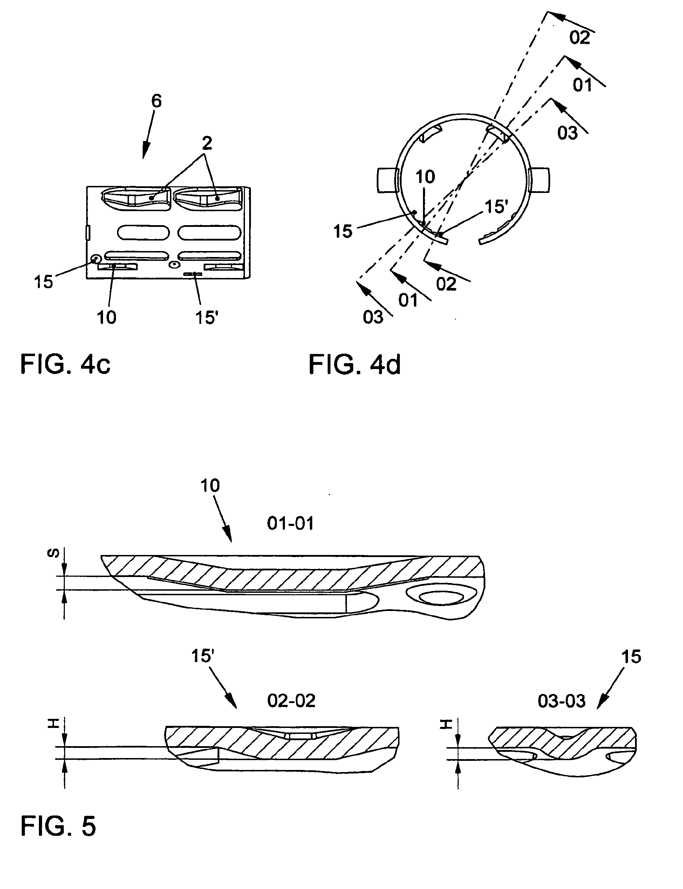

Die Fig. 4 zeigt das erste Ausführungsbeispiel gemäß Fig. 3 in vier Ansichten und mit zwei Arten von Hebe-/ Führungselementen 15 und 15'. Fig. 4a zeigt eine erste Seitenansicht der Klemmbuchse 6, wobei hier im Wesentlichen die Festpunkte 10 sowie die Hebe-/ Führungselemente 15 bzw. 15' sichtbar sind.

Fig. 4b zeigt eine zweite Seitenansicht der Klemmbuchse 6, wobei diese Seite der Klemmbuchse 6 der ersten Seite gemäß Fig. 4a gegenüberliegt. Auf der zweiten Seitenansicht der Klemmbuchse 6 sind im Wesentlichen die federnden Zungen 2 sichtbar.

Die federnden Zungen 2 können hierbei gerade (siehe Fig. 2) oder verlängert und in der Breite variabel (siehe Fig. 4b) ausgeführt sein. Die federnden Zungen 2 sind hierbei etwa in ihrer Mitte geknickt, so dass der Teil der federnden Zunge der an dem Klemmbuchsenmantel beginnt, zuerst nach innen gebogen ist und dann ab etwa der Mitte nach außen gebogen ist (siehe Fig. 2). Demgegenüber sind die federnden Zungen 2 gemäß Fig. 4b zuerst bis über ihre breiteste Stelle 5 hinaus nach innen gebogen und dann bis zu der Zungenspitze 4 nach außen gebogen. Der nach außen gebogene Teil der federnden Zungen 2 ist hierbei mit dem Bezugszeichen 3 versehen. Dieser nach außen gebogene Teil der federnden Zungen 2 liegt hierbei zwischen der breitesten Stelle 5, die sich etwa in der Mitte der federnden Zunge 2 befindet, und der Zungenspitze 4.

Ein relativ kleiner Abstand zwischen der jeweiligen Zungenspitze 4 und dem gegenüberliegendem Klemmbuchsenmantel wird dadurch erreicht, dass in zwei gesonderten Arbeitsgängen bei der Herstellung der Klemmbuchse 6 zunächst die Zungen 2 gestanzt und anschließend die Zungenspitzen 4 getrennt wird.

Fig. 4c zeigt eine weitere Seitenansicht der Klemmbuchse 6, wobei hier sowohl die federnden Zungen 2 als auch die Festpunkte 10 sowie die Hebe-/ Führungselemente 15 bzw. 15' dargestellt sind.

Fig. 4d zeigt eine Draufsicht auf die Klemmbuchse 6 mit Schnittlinien durch die Festpunkte 10 (Schnitt 01-01), die Hebe-/ Führungselemente 15 (Schnitt 03-03) und die Hebe-/ Führungselemente 15' (Schnitt 02-02).

Die Hebe-/ Führungselemente können gerundet bzw. halbkugelförmig (Bezugszeichen 15) oder rampenförmig bzw. länglich (Bezugszeichen 15') ausgeführt sein. Es können auch mehrere Hebe-/ Führungselemente 15 bzw. 15' vor einem Festpunkt 10 angeordnet sein, wobei z. B. bei der Verwendung von zwei Hebe-/ Führungselementen 15 bzw. 15' diese eine unterschiedliche Ausdehnung in radialer Richtung aufweisen, so dass beim Einstecken des Stabsensors 1 dieser zuerst von dem ersten Hebe-/ Führungselement 15 bzw. 15' leicht angehoben wird um danach von dem zweiten Hebe-/ Führungselement 15 bzw. 15' noch etwas weiter in Richtung des Festpunktes 10 angehoben zu werden. Somit wird ein gestuftes Anheben des Stabsensors 1 in Richtung der Festpunkte 10 realisiert. Zur gestuften Anhebung des Stabsensors 1 in Richtung der Festpunkte 10 sind verschiedene Ausführungen der Hebe-/ Führungselemente 15 bzw. 15' denkbar, z. B. sind in Fig. 4a Hebe-/ Führungselemente 15' mit einer rampenförmigen Kontur dargestellt, die ebenfalls ein gestuftes Heranführen des Stabsensors 1 an die Festpunkte 10 ermöglichen.

Die Hebe-/ Führungselemente 15 bzw. 15' können hierbei direkt oder auch versetzt in Längsrichtung vor einem Festpunkt 10 angeordnet sein. Wenn mehrere Hebe-/ Führungselemente 15 bzw. 15' verwendet werden, so können diese sowohl in Längsrichtung direkt hintereinander als auch zueinander und zum Festpunkt 10 versetzt angeordnet sein.

Die Fig. 5 zeigt vergrößert die drei Schnitte gemäß Fig. 4d. Der Schnitt durch Festpunkt 10 ist mit 01-01 bezeichnet, der Schnitt durch das rampenartige Hebe-/ Führungselement 15' mit 02-02 und der Schnitt durch das gerundete Hebe-/ Führungselement 15 mit 03-03. Die Höhe des Festpunktes 10 ist mit "S" und die Höhe des Hebe-/ Führungselements 15 bzw. 15' ist mit "H" bezeichnet. Hierbei gilt, dass die Höhe H des Hebe-/ Führungselementes 15 bzw. 15' kleiner als die Höhe S des Festpunktes 10 ist. Somit sind die Hebe/- Führungselemente 15 bzw. 15' niedriger als die Festpunkte 10.

Die Zungen 2 können im montierten Zustand der Klemmbuchse 6 und des Stabsensors 1 sowohl zum Fuß 8 (siehe Fig. 1) des Stabsensors als auch zum Kopf 9 des Stabsensors 1 hinweisen.

Gemäß einer nicht dargestellten Ausführungsform der Erfindung ist es auch möglich, dass ein Teil der Zungen 2 zum Fuß 8 und ein anderer Teil der Zungen 2 zum Kopf 9 des Stabsensors 1 weisen. Hierbei kann der mit der Klemmbuchse 6 verbundene Teil (der so genannte Fußpunkt) der federnden Zungen 2 im mittleren Teil der Klemmbuchse 6 befestigt sein und die federnden Zungen 2 jeweils nach außen weisen. Bei dieser Ausführung liegen die nach außen gebogenen Teile 3 der Zungen 2 mit dem Stabsensor 1 besonders weit auseinander.

Ferner ist es auch möglich, dass die Klemmbuchse 6 jeweils zwei oder mehrere Festpunkte pro federnde Zunge 2 aufweist. Hierbei können z. B. die federnden Zungen 2 und die zwei Festpunkte 10 gleichmäßig auf dem Umfang der Klemmbuchse 6 verteilt sein.

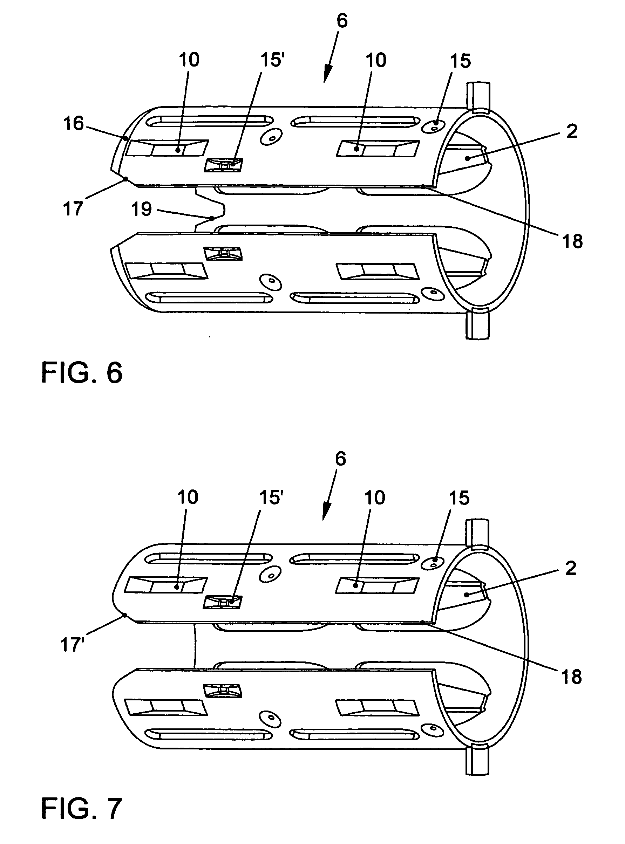

Fig. 6 zeigt ein zweites Ausführungsbeispiel einer Klemmbuchse 6 mit Einführungsfase 16 und einer ersten Einführungskontur 17. Die Klemmbuchse 6 weist an der zur Einsteckseite, d. h. die Seite der Klemmbuchse die zuerst in die Bohrung eines Halteteils 12 (siehe Fig. 1) eingesteckt wird, hin gerichteten Kante eine Einführungsfase 16 auf, die das Einstecken der Klemmbuchse in die zugehörige Bohrung erleichtert. Die Einführungsfase 16 erstreckt sich hierbei über den gesamten Umfang der zur Einsteckseite hin gerichteten Kante. Weiterhin kann die Klemmbuchse 6 anstatt oder zusätzlich zu der Einführungsfase eine erste Einführungskontur 17 aufweisen. Diese erste Einführungskontur 17 ist hierbei gradlinig unter einem Winkel zum Längsschlitz 18 ausgeführt. Der Längsschlitz 18 der Klemmbuchse wiest hierbei eine gradlinige Kontur auf, d. h. der Längsschlitz erstreckt sich allein in axialer Richtung der Klemmbuchse 6. Weiterhin zeigt die Klemmbuchse 6 gemäß Fig. 6 eine weitere Einführungskontur 19, welche zusätzlich zur ersten Einführungskontur 17 an der selben Kante der Klemmbuchse 6 angeordnet werden kann. Auch kann die weitere Einführungskontur 19 ohne die erste Einführungskontur 17 verwendet werden. Die erste und/oder die weitere Einführungskontur 17 bzw. 19 kann/können an beliebiger Stelle der Kante der Einsteckseite der Klemmbuchse 6 angeordnet werden. Es können auch mehrere, hier nicht gezeigte Einführungskonturen verwendet werden. Die weiteren Bezugszeichen der Fig. 6 sind identisch zu denen der Figuren 1 bis 5.

Fig. 7 zeigt ein drittes Ausführungsbeispiel einer Klemmbuchse 6 mit einer zweiten Einführungskontur 17' auf, die eine gerundete Kontur aufweist. Diese zweite Einführungskontur 17' kann entweder am gradlinigen Längsschlitz 18 der Klemmbuchse 6 angeordnet sein, oder an einer bzw. mehrerer anderer(n) Stellen der Klemmbuchse 6 (nicht gezeigt). Die weiteren Bezugszeichen der Fig. 7 sind identisch zu denen der Figuren 1 bis 6. Selbstverständlich kann bei dem zweiten Ausführungsbeispiel gemäß Fig. 7 auch eine Einführungsfase (siehe Bezugszeichen 16 in Fig. 6) verwendet werden. Ferner ist auch eine Kombination von unterschiedlich geformten (gradlinig; gerundet) Einführungskonturen (siehe Bezugszeichen 17, 17', 19 in den Figuren 6 und 7) an einer Klemmbuchse 6 in Verbindung mit einer Einführungsfase 16 oder ohne eine Einführungsfase 16 durch den Erfindungsgedanken abgedeckt.

## Patentansprüche

1. Klemmbuchse (6) für einen Sensor (1) zur reibschlüssigen Fixierung und Justierung des Sensors (1) in einer Bohrung eines Halteteils (12), wobei die Klemmbuchse (6) mit mindestens einer federnden Zunge (2) und mindestens einem Festpunkt (10) versehen ist, wobei die mindestens eine federnde Zunge (2) an einer Seite mit der Klemmbuchse (6) verbunden und an ihrer Spitze frei beweglich ist, **dadurch gekennzeichnet, dass** vor mindestens einem Festpunkt (10) und/ oder mindestens einer federnden Zunge (2) mindestens ein Hebe-1 Führungselement (15; 15') angeordnet ist.

2. Klemmbuchse nach Anspruch 1, **dadurch gekennzeichnet, dass** das mindestens eine Hebe-/ Führungselement (15) eine im Wesentlichen halbkugelförmige Kontur aufweist.

3. Klemmbuchse nach Anspruch 1, **dadurch gekennzeichnet, dass** das mindestens eine Hebe-/ Führungselement (15') eine rampenförmige Kontur aufweist.

4. Klemmbuchse nach einem oder mehreren der Ansprüche 1 bis 3, **dadurch gekennzeichnet, dass** die mindestens eine federnde Zunge (2) im Wesentlichen achsparallel zur Längsachse der Klemmbuchse (6) angeordnet ist.

5. Klemmbuchse nach einem oder mehreren der Ansprüche 1 bis 4, **dadurch gekennzeichnet, dass** der Mittelteil der mindestens einen federnden Zunge (2) verbreitert ist.

6. Klemmbuchse nach Anspruch 5, **dadurch gekennzeichnet, dass** die mindestens eine federnde Zunge (2) zuerst bis über ihre breiteste Stelle (5) hinaus nach innen gebogen und dann bis zu ihrer Zungenspitze (4) nach außen gebogen ist.

7. Klemmbuchse nach einem oder mehreren der Ansprüche 1 bis 6, **dadurch gekennzeichnet, dass** der Sensor (1) von der mindestens einen federnden Zunge (2) gegen durch Eindrücken des Klemmbuchsenmantels erzeugte Festpunkte (10) der Klemmbuchse (6) gedrückt wird.

8. Klemmbuchse nach einem oder mehreren der Ansprüche 1 bis 7, **dadurch gekennzeichnet, dass** das mindestens eine Hebe-/ Führungselement (15; 15') in radialer Richtung der Klemmbuchse (6) eine geringere Höhe als der mindestens eine Festpunkt (10) aufweist.

9. Klemmbuchse nach einem oder mehreren der Ansprüche 1 bis 8, **dadurch gekennzeichnet, dass** sich der Sensor (1) im montierten Zustand auf der mindestens einen federnden Zunge (2) abstützt.

10. Klemmbuchse nach einem oder mehreren der Ansprüche 1 bis 9, **dadurch gekennzeichnet, dass** vor mindestens einem Festpunkt (10) mehrere Hebe-/ Führungselemente (15; 15') angeordnet sind, wobei die mehreren Hebe-/ Führungselemente (15; 15') jeweils in radialer Richtung der Klemmbuchse (6) unterschiedliche Höhen aufweisen.

11. Klemmbuchse nach einem oder mehreren der Ansprüche 1 bis 10, **dadurch gekennzeichnet, dass** die mindestens eine federnde Zunge (2) im montierten Zustand der Klemmbuchse (6) zum Fuß (8) oder zum Kopf (9) des Sensors (1) weist.

12. Klemmbuchse nach einem oder mehreren der Ansprüche 1 bis 11, **dadurch gekennzeichnet, dass** die Klemmbuchse mehrere federnde Zungen (2) aufweist, wobei ein Teil der federnden Zungen (2) zum Fuß (8) und ein anderer Teil der federnden Zungen (2) zum Kopf (9) des Sensors (1) weist.

13. Klemmbuchse nach Anspruch 12, **dadurch gekennzeichnet, dass** die Fußpunkte der federnden Zungen (2) im mittleren Teil der Klemmbuchse (6) befestigt sind und die federnden Zungen (2) zum jeweiligen Rand der Klemmbuchse (6) weisen.

14. Klemmbuchse nach einem oder mehreren der Ansprüche 1 bis 13, **dadurch gekennzeichnet, dass** die Klemmbuchse (6) an der zur Einsteckseite, d. h. die Seite der Klemmbuchse die zuerst in die Bohrung eines Halteteils (12) eingesteckt wird, hin gerichteten Kante eine Einführungsfase (16) aufweist.

15. Klemmbuchse nach einem oder mehreren der Ansprüche 1 bis 14, **dadurch gekennzeichnet, dass** die Klemmbuchse (6) mindestens eine Einführungskontur (17; 17'; 19) aufweist.

16. Klemmbuchse nach Anspruch 15, **dadurch gekennzeichnet, dass** die Einführungskontur (17, 17', 19) eine gradlinige oder eine gerundete Kontur aufweist.

## Claims

1. Adaptor bushing (6) for a sensor (1) for fixing and adjusting the sensor (1) in a non-positive manner in a bore of a securing part (12), wherein the adaptor bushing (6) is provided with at least one resilient tongue (2) and at least one fixed point (10), wherein the at least one resilient tongue (2) is connected on one side to the adaptor bushing (6) and is freely movable on the tip thereof, **characterized in that** at least one lift/guide element (15; 15') is arranged before at least one fixed point (10) and/or at least one resilient tongue (2).

2. Adaptor bushing according to Claim 1, **characterized in that** the at least one lift/guide element (15) has an essentially hemispherical contour.

3. Adaptor bushing according to Claim 1, **characterized in that** the at least one lift/guide element (15') has a ramp-shaped contour.

4. Adaptor bushing according to one or more of Claims 1 to 3, **characterized in that** the at least one resilient tongue (2) is arranged essentially with its axis parallel to the longitudinal axis of the adaptor bushing (6).

5. Adaptor bushing according to one or more of Claims 1 to 4, **characterized in that** the middle part of the at least one resilient tongue (2) is widened.

6. Adaptor bushing according to Claim 5, **characterized in that** the at least one resilient tongue (2) is firstly bent inward to beyond its widest point (5), and is then bent outward as far as its tongue tip (4).

7. Adaptor bushing according to one or more of Claims 1 to 6, **characterized in that** the sensor (1) is pressed by the at least one resilient tongue (2) against fixed points (10), generated by pressing in the adaptor bushing casing, of the adaptor bushing (6).

8. Adaptor bushing according to one or more of Claims 1 to 7, **characterized in that** the at least one lift/guide element (15; 15') has a smaller height in the radial direction of the adaptor bushing (6) than the at least one fixed point (10).

9. Adaptor bushing according to one or more of Claims 1 to 8, **characterized in that** in the mounted state the sensor (1) is supported on the at least one resilient tongue (2).

10. Adaptor bushing according to one or more of Claims 1 to 9, **characterized in that** a plurality of lift/guide elements (15; 15') are arranged before at least one fixed point (10), wherein the plurality of lift/guide elements (15; 15') each have different heights in the radial direction of the adaptor bushing (6).

11. Adaptor bushing according to one or more of Claims 1 to 10, **characterized in that** in the mounted state of the adaptor bushing (6) the at least one resilient tongue (2) points to the foot (8) or to the head (9) of the sensor (1).

12. Adaptor bushing according to one or more of Claims 1 to 11, **characterized in that** the adaptor bushing has a plurality of resilient tongues (2), wherein some of the resilient tongues (2) point to the foot (8), and some others of the resilient tongues (2) point to the head (9) of the sensor (1).

13. Adaptor bushing according to Claim 12, **characterized in that** the foot points of the resilient tongues (2) are attached in the central part of the adaptor bushing (6), and the resilient tongues (2) point to the respective edge of the adaptor bushing (6).

14. Adaptor bushing according to one or more of Claims 1 to 13, **characterized in that** the adaptor bushing (6) has an insertion chamfer (16) on the edge directed toward the plugging-in side, i.e. the side of the adaptor bushing which is first plugged into the bore in a securing part (12).

15. Adaptor bushing according to.one or more of Claims 1 to 14, **characterized in that** the adaptor bushing (6) has at least one insertion contour (17; 17'; 19).

16. Adaptor bushing according to Claim 15, **characterized in that** the insertion contour (17, 17', 19) has a linear or a rounded contour.

## Revendications

1. Douille de serrage (6) pour un capteur (1) pour la fixation par engagement par friction et l'ajustement du capteur (1) dans un alésage d'une pièce de retenue (12), la douille de serrage (6) étant pourvue d'au moins une langue élastique (2) et d'au moins un point fixe (10), l'au moins une langue élastique (2) étant connectée d'un côté à la douille de serrage (6) et étant librement mobile au niveau de sa pointe, **caractérisée en ce qu'**au moins un élément de levage/guidage (15 ; 15') est disposé devant l'au moins un point fixe (10) et/ou devant l'au moins une langue élastique (2).

2. Douille de serrage selon la revendication 1, **caractérisée en ce que** l'au moins un élément de levage/guidage (15) présente un contour de forme sensiblement hémisphérique.

3. Douille de serrage selon la revendication 1, **caractérisée en ce que** l'au moins un élément de levage/guidage (15') présente un contour en forme de rampe.

4. Douille de serrage selon l'une quelconque ou plusieurs des revendications 1 à 3, **caractérisée en ce que** l'au moins une langue élastique (2) est disposée avec son axe sensiblement parallèle à l'axe longitudinal de la douille de serrage (6).

5. Douille de serrage selon l'une quelconque ou plusieurs des revendications 1 à 4, **caractérisée en ce que** la partie centrale de l'au moins une langue élastique (2) est élargie.

6. Douille de serrage selon la revendication 5, **caractérisée en ce que** l'au moins une langue élastique (2) est d'abord cintrée vers l'intérieur jusqu'au-delà de son point le plus large (6), puis est cintrée vers l'extérieur jusqu'à sa pointe de langue (4).

7. Douille de serrage selon l'une quelconque ou plusieurs des revendications 1 à 6, **caractérisée en ce que** le capteur (1) est pressé par l'au moins une langue élastique (2) contre des points fixes (10) de la douille de serrage (6) produits par enfoncement de l'enveloppe de la douille de serrage.

8. Douille de serrage selon l'une quelconque ou plusieurs des revendications précédentes 1 à 7, **caractérisée en ce que** l'au moins un élément de levage/guidage (15 ; 15') présente dans la direction radiale de la douille de serrage (6) une hauteur inférieure à l'au moins un point fixe (10).

9. Douille de serrage selon l'une quelconque ou plusieurs des revendications 1 à 8, **caractérisée en ce que** le capteur (1) s'appuie dans l'état monté sur l'au moins une langue élastique (2).

10. Douille de serrage selon l'une quelconque ou plusieurs des revendications 1 à 9, **caractérisée en ce que** plusieurs éléments de levage/guidage (15 ; 15') sont disposés devant au moins un point fixe (10), lesdits plusieurs éléments de levage/guidage (15 ; 15') présentant à chaque fois des hauteurs différentes dans la direction radiale de la douille de serrage (6).

11. Douille de serrage selon l'une quelconque ou plusieurs des revendications 1 à 10, **caractérisée en ce que** l'au moins une langue élastique (2) est tournée dans l'état monté de la douille de serrage (6) vers la base (8) ou vers la tête (9) du capteur (1).

12. Douille de serrage selon l'une quelconque ou plusieurs des revendications 1 à 11, **caractérisée en ce que** la douille de serrage présente plusieurs langues élastiques (2), une partie des langues élastiques (2) étant tournée vers la base (8) et une autre partie des langues élastiques (2) étant tournée vers la tête (9) du capteur (1).

13. Douille de serrage selon la revendication 12, **caractérisée en ce que** les points de base des langues élastiques (2) sont fixées dans la partie centrale de la douille de serrage (6) et les langues élastiques (2) sont tournées vers le bord respectif de la douille de serrage (6).

14. Douille de serrage selon l'une quelconque ou plusieurs des revendications 1 à 13, **caractérisée en ce que** la douille de serrage (6) présente un biseau d'insertion (16) sur l'arête orientée vers le côté d'enfichage, c'est-à-dire le côté de la douille de serrage qui est enfiché en premier dans l'alésage d'une pièce de retenue (12).

15. Douille de serrage selon l'une quelconque ou plusieurs des revendications 1 à 14, **caractérisée en ce que** la douille de serrage (6) présente au moins un contour d'insertion (17 ; 17' ; 19).

16. Douille de serrage selon la revendication 15, **caractérisée en ce que** le contour d'insertion (17, 17', 19) présente un contour rectiligne ou arrondi.
